# EUROPÄISCHE PATENTSCHRIFT

(11) **EP 2 053 268 B1**
(45) Veröffentlichungstag und Bekanntmachung des Hinweises auf die Patenterteilung: **16.03.2011**
(21) Anmeldenummer: 07450190.9
(22) Anmeldetag: 24.10.2007
(51) Int. Cl.: F16G 5/10, B29D 29/06, B29C 33/20, B29C 35/02, B29C 43/22

(54) **Vorrichtung und Verfahren zur Aufvulkanisierung von Kautschukprofilen auf Transport- und Prozessbänder**
Device and method for vulcanisation of rubber profiles on conveyor and process belts
Procédé et dispositif destinés à la vulcanisation de profilés en caoutchouc sur des bandes de transport et de processus

(43) Veröffentlichungstag der Anmeldung: 29.04.2009
(73) Patentinhaber: Mihaljevic, Boris, 1050 Wien (AT)
(72) Erfinder: Mihaljevic, Boris, 1050 Wien (AT)
(74) Vertreter: Patentanwaltskanzlei Matschnig & Forsthuber OG

(56) Entgegenhaltungen:
- WO-A-97/22462
- WO-A-97/26120
- DE-U1- 20 100 627
- US-A- 1 777 310
- US-A- 2 696 865
- US-A- 3 866 483
- US-A- 3 969 051
- US-A- 4 543 140

## Beschreibung

Die Erfindung betrifft ein Verfahren zum Vulkanisieren von Kautschukprofilen auf Transport- oder Prozessbänder mit den Schritten:
- Vorbereiten, insbesondere Reinigen der Metalloberfläche des Transport- oder Prozessbandes,
- Auftragen eines Vulkanisierprimers,
- Aufbringen eines unvulkanisierten Kautschuks in Strangform und
- Vulkanisieren des Kautschuks unter erhöhter Temperatur

Des Weiteren betrifft die Erfindung eine Vorrichtung zum Vulkanisieren von Kautschuk auf Transport- oder Prozessbänder aus Metall mit einem Oberteil und einem Unterteil, bestehend aus jeweils einem Gehäuse, einer Isolierung und einer Pressplatte, wobei ein Band oder Bandabschnitt zwischen die Pressplatten des Ober- und Unterteils durchführbar ist.

Transport- und Prozessbänder aus Metall werden in der Industrie, insbesondere in der Lebensmittel-, Tiernahrungsmittel- und chemischen Industrie, aber auch beispielsweise in der Holzindustrie bei der Spanplattenfertigung in hohem Maß eingesetzt. Die Metalloberfläche dieser Förderbänder ist leicht zu reinigen und unempfindlich gegenüber Temperaturbelastungen, beispielsweise in Tunnelöfen mit nachfolgenden Kühlstrecken. Zudem ist sie weitgehendst inert gegenüber chemischen Stoffen.

Elastomerprofile dienen auf der Produktseite des Förderbandes als Seitenbegrenzung (sogenannte Stauleisten oder Rückhalteprofile), damit das auf der Produktseite des Förderbandes befindliche Gut nicht im Zuge der Beförderung verloren geht. Des Weiteren sind häufig Profile an der Unterseite des Transport- oder Prozessbandes angebracht. Hier sind sie Teil des Antriebsystems.

Diese Elastomerprofile werden üblicherweise mittels spezieller Kleber auf den Transport- oder Prozessbänder angebracht. Als Kleber fungieren zumeist Harzkleber, die in einem Heißklebeverfahren das vulkanisierte Elastomer mit der Metallunterlage verbinden.

Nachteilig an dieser Methode zur Herstellung einer Elastomer-Metall-Verbindung ist, dass die Klebestellen den Belastungen, vor allern Scher- und Umlenkkräften, denen ein Transport- oder Prozessband ausgesetzt ist, nicht gewachsen sind. Insbesondere verlieren die Kleber bei Temperaturbelastungen von über 80°C ihre Haftfähigkeit und die Elastomer-Metall-Verbindung wird gelöst.

Die US 2,696,865 offenbart ein Verfahren und eine Vorrichtung zur Herstellung von Förderbändern, wobei ein dünnes Metallband zunächst mittels Sandstrahlen gereinigt, danach mit einem Primer beschichtet und ein unvulkanisierter Kautschuk mittels Extruder oder Kalander aufgebracht wird. Danach erfolgt die Vulkanisierung des Kautschuks unter erhöhter Temperatur.

Aus der US-A-3 969 051 ist eine Vorrichtung zum miteinander Verbinden von Gummiplatten bzw. den Enden von Gummigurten bekannt.

Aus der DE 201 00 627 U1 ist eine Heizpresse zum Verbinden von zwei Enden eines Elasto-merbandes bekannt, wobei der Druck mit einem oberen und einem unteren Druckschlauch aufgebracht wird.

Der WO 97/26120 ist ein Verfahren mit zugehöriger Vorrichtung zu entnehmen, bei dem die Vulkanisation ebenfalls bei erhöhter Temperatur erfolgt. Der unvulkanisierte Kautschuk wird vor dem Vulkanisieren zunächst unter Druck in Formen gepresst; der eigentliche Vulkanisierprozess erfolgt druckfrei bei erhöhten Temperaturen.

Um den Kautschuk mit dem gewünschten Profilquerschnitt extrudieren zu können, werden Weichmacher hinzugeben. Diese wirken sich jedoch nachteilig auf das Abriebverhalten des Elastomerprofils aus.

Es ist daher Aufgabe der Erfindung, eine Methode zur Herstellung einer Elastomer-Metall-Verbindung zu liefern, die den Gehalt an Weichmachern in dem Elastomerprofil reduziert sowie eine genaue Fertigung der Elastomerprofile ermöglicht.

Diese Aufgabe wird ausgehend von einem Verfahren der eingangs erwähnten Art erfindungsgemäß dadurch gelöst, dass die Vulkanisation zusätzlich unter Druck erfolgt, wobei die Aufbringung des Druckes unter Verwendung eines schlauchförmigen Druckelementes erfolgt, und dass die Formgebung des Elastomerprofils beim Vulkanisieren des Kautschuks erfolgt.

Unter "Kautschuk" sind im Rahmen dieser Offenbarung unvernetzte, vulkanisierbare Polymere mit gummielastischen Eigenschaften zu verstehen. Neben Naturkautschuke werden insbesondere Synthese-Kautschuke, wie beispielsweise Styrol-Butadien-Kautschuk (SBR), Nitrilkautschuk (NBR), Silikonkautschuke oder Fluorkautschuke, gegebenenfalls mit Additiven zur Verbesserung ihrer mechanischen und/oder chemischen Eigenschaften, insbesondere Vulkanisierbeschleuniger versehen, als Stau- oder Führungsleisten auf Transport- und Prozessbändern eingesetzt. Als "Elastomere" bzw. "Elastomerprofile" werden die ausvulkanisierten Kautschuke bezeichnet.

Der Vorteil dieses Verfahrens der Direktvulkanisation des Kautschuks auf der Metalloberfläche ist, dass der verwendete Kautschuk im Vergleich zu den bei den in den Klebeverfahren verwendeten Elastomeren einen geringeren Anteil an Weichmacher benötigt. Im erfindungsgemäßen Verfahren erfolgt die Formgebung des Elastomerprofils beim Vulkanisieren des Kautschuks, sodass die erforderliche Menge an Weichmachern deutlich reduziert - für gewöhnlich um 10% - werden kann. Das ausvulkanisierte Elastomerprofil weist dadurch eine erheblich höhere Abriebfestigkeit auf. Des Weiteren ist die Verbindung zwischen Elastomer und Metalloberfläche besonders temperaturbeständig; so sind je nach Elastomertyp bis zu 180°C Dauertemperaturbelastung des erfindungsgemäßen Transport- und Prozessbandes möglich.

Eine besonders gute Haftfähigkeit des Kautschuks nach dem Vulkanisieren auf dem Transport- oder Prozessband ist gegeben, wenn die Vorbehandlung der Metalloberfläche mittel Sandstrahlen erfolgt. Dadurch wird die Metalloberfläche bestmöglich aufgeraut.

In einer bevorzugten Ausführung der Erfindung wird nach Reinigung der Metalloberfläche ein Metallprimer aufgetragen. Nachfolgend wird der Vulkanisierprimer aufgetragen, wodurch sich die Hafteigenschaften des Kautschuks nochmals deutlich verbessern.

Es ist ebenso möglich, ein Einschicht-Bindemittel aufzutragen. Dieses Bindemittel vereint sowohl die Eigenschaften des Metallprimers als auch jene des Vulkanisierprimers in sich. Somit ist nur ein einmaliges Aufbringen eines Haftvermittlers notwendig.

Als besonders geeignet hat sich das Verfahren der Direktvulkanisation für Transport- und Prozessbänder aus Stahl, insbesondere aus Edelstahl, herausgestellt. Diese Materialien zeichnen sich durch eine besonders hohe Resistenz gegenüber Chemikalien aus, sind temperaturunempfindlich und mechanisch stabil.

In einer bevorzugten Variante des erfindungsgemäßen Verfahrens ist dieses ein Taktverfahren. Dabei werden auf jeweils ein Segment des Transport- oder Prozessbandes ein oder mehrere Elastomerprofile aufvulkanisiert, wodurch auch Endlosbänder verarbeitet werden können.

Ebenso wird die Aufgabe mit der Vorrichtung nach Anspruch 7 gelöst, bei der die Pressplatte des Oberteils an der dem Transport- oder Prozessband oder -abschnitt zugewandten Pressfläche zumindest eine Ausnehmung aufweist, deren Querschnitt dem Querschnitt des Elastomerprofils nach der Vulkanisation entspricht. Nach dem Auftragen des Vulkanisierprimers und dem Aufbringen des Kautschuks in beispielsweise Strangform auf die Oberfläche des Förderbandes wird das Förderband in die Vulkanisierpresse geführt und liegt auf dessen Unterteil auf.

In der erfindungsgemäßen Vulkanisierpresse ist im Ober- und/oder Unterteil der Presse zumindest ein Druckelement zwischen Gehäuse und Isolierung angeordnet. Dieses Druckelement erlaubt eine präzise Druckübertragung von der Presse auf das Transport- oder Prozessband, wodurch eine genauere Fertigung erzielt wird. Üblicherweise werden in Pressen Druckzylinder verwendet, wobei diese naturgemäß nur in einem beschränkten Flächenbereich einen gleichmäßigen Pressdruck aufbauen. Im Gegensatz hierzu befindet sich entweder im Oberteil oder im Unterteil der Vulkanisierpresse das erfindungsgemäße Druckelement. Ebenso ist in einer weiteren Ausführung der Erfindung in beiden Teilen der Presse ein weiteres Druckelement vorgesehen.

Bevorzugterweise ist das Druckelement schlauchförmig ausgebildet. Hierbei wird Luft mit Druck durch den Schlauch geführt. Ebenso sind Wasser oder andere im Wesentlichen inkompressible Flüssigkeiten oder Gase als Füllmedium geeignet. Der Druckschlauch, dessen Wirkfläche der Pressfläche der Presse entspricht, erlaubt ein gleichmäßiges Verpressen des Kautschuks. Kommt es beispielsweise zu einer Verformung des Transport- oder Prozessbandes bzw. der Pressplatte(n), z.B. aufgrund der Temperatur in der Presse und dadurch zu einer Änderung des Abstandes zwischen Transportband und Pressplatte, so erlaubt die Flexibilität des Schlauches einen Ausgleich dieses Höhenunterschiedes, und ein gleichmäßiger Anpressdruck bleibt bestehen.

Aufgrund des gleichmäßigen Anpressdruckes sind Transportbänder mit einer Länge von mehreren Metern verarbeitbar. Eine konventionelle Vulkanisationspresse kann vergleichbare Längenbearbeitungen nur mit einem komplizierten Aufbau von zahlreichen Druckzylindern realisieren, wobei hier trotzdem keine ebenso gleichmäßige Druckverteilung wie in der erfindungsgemäßen Vulkanisierpresse erzielt wird. Ein gleichmäßiger Anpressdruck ist aber wesentlich, um eine optimale Haftung des Elastomers auf der Metalloberfläche des Transportbandes zu erhalten.

In einer bevorzugten Ausführung der Erfindung sind Ober- und Unterteil der Presse direkt beheizbar. Ebenso kann vorgesehen sein, dass nur ein Teil, nämlich Ober- oder Unterteil direkt beheizbar sind. Als direkte Heizung wird bevorzugt eine elektrische Heizplatte zwischen Isolierung und Pressplatte eingefügt.

In einer anderen Variante der Erfindung werden Ober- und/oder Unterteil indirekt beheizt. So kann beispielsweise eine Beheizung der Pressplatte über ein Heizmedium, z.B. Öl erfolgen, wobei das Heizmedium in Kanälen, die sich in der Pressplatte befinden, durchgeleitet wird. Ebenso können Widerstandsheizungen in beispielsweise Spiralform eingesetzt werden.

Der Kautschuk wird durch Zusammenführen des Ober- und Unterteils verpresst und aufgrund der in der Presse herrschenden Temperatur vulkanisiert. Durch das Ausvulkanisieren des Elastomerprofils in der Presse wird dem Elastomer seine endgültige Form, beispielsweise Keilform gegeben, die es auch nach dem Abkühlen außerhalb der Presse beibehält

Im Folgenden wird eine nicht-einschränkende Ausführung der Erfindung anhand von Figuren erläutert. Hierin zeigen
- Fig. 1A-C: eine erfindungsgemäße Vulkanisierpresse im Querschnitt in drei unterschiedli- chen Ausführungen.
- Fig. 2: ein erfindungsgemäßes Transportband mit Begrenzungsprofil im Querschnitt,
- Fig. 3: ein erfindungsgemäßes Transportband mit Führungsprofil im Querschnitt, und
- Fig. 4: ein erfindungsgemäßes Transportband mit Begrenzungsprofil und Führungs- profil im Querschnitt.

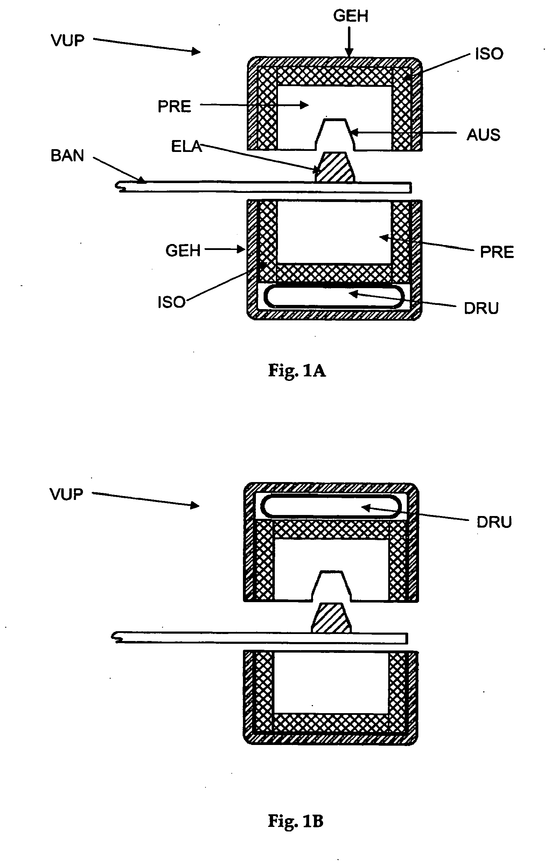

Fig. 1A zeigt eine erfindungsgemäße Vulkanisierpresse VUP, bestehend aus einem Oberteil und einem Unterteil. Der Oberteil weist eine Pressplatte PRE aus Metall, beispielsweise Aluminium, mit einer Ausnehmung AUS auf der Pressseite auf. Die Pressplatte PRE wird regelbar beheizt; die Temperaturen sind von dem jeweiligen zu vulkanisierenden Material abhängig und können zwischen 80°C und 220°C betragen. Die indirekt oder direkt beheizbare Pressplatte PRE ist von einer Wärmeisolierung ISO, mit Ausnahme der Pressseite, umgeben. Gängige Isoliermaterialien wie beispielsweise Platten aus anorganischen Fasern und Füllstoffen mit organischen Bindemitteln (z.B. NEFALIT®) werden hier eingesetzt. Zum Abschluss sind Isolierung ISO und Pressplatte PRE noch in einem Gehäuse GEH untergebracht.

Der Unterteil der Vulkanisierpresse VUP ist wie der Oberteil mit Pressplatte PRE, Isolierung ISO und Gehäuse GEH ausgerüstet. Zusätzlich befindet sich zwischen Isolierung ISO und Gehäuse GEH ein Druckschlauch DRU als Druckelement. Mit diesem Druckelement können Pressdrücke von 2 bis 100 bar gleichmäßig aufgebracht werden.

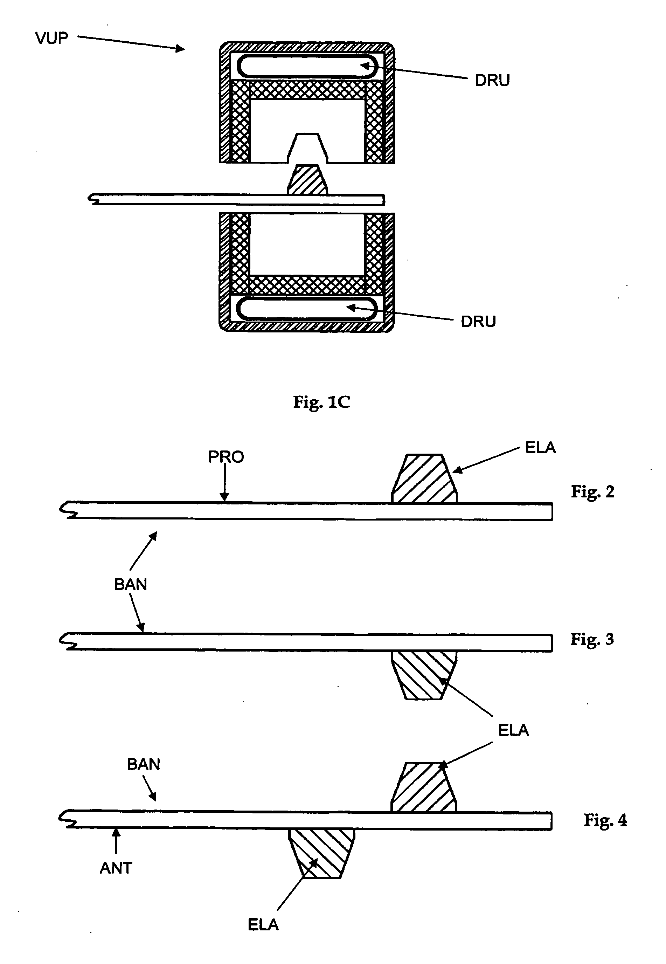

In den Figuren 1B und 1C sind zwei weitere Varianten der Vulkanisierpresse VUP dargestellt. In der Fig. 1B befindet sich der Druckschlauch DRU in dem Oberteil der Presse VUP, während die Vulkanisierpresse VUP gemäß Fig. 1C mit jeweils einem Druckschlauch DRU im Oberteil und Unterteil ausgestattet ist.

Die Oberfläche des Transportbandes BAN wird vor dem Vulkanisieren zunächst mechanisch und/oder chemisch gereinigt. Besonders vorteilhaft ist es, wenn die Vorbehandlung mittels Sandstrahlen erfolgt. Hierbei wird beispielsweise Korund mit einer Partikelgröße von 0,25 bis 0,75 mm eingesetzt. Danach wird ein Metallprimer, z.B. Chemosil 211® von Henkel, aufgetragen, beispielsweise gespritzt, gewalzt, getaucht oder gepinselt. Der Metallprimer verbessert einerseits die Haftung des Kautschuks auf der Metalloberfläche und erhöht andererseits die Korrosionsbeständigkeit der Metallunterlage. Sobald der Metallprimer getrocknet ist, wird ein Vulkanisierprimer (Heißvulkanisier-Haftvermittler), z.B. Chemosil 231® von Henkel, auf an sich bekannte Weise aufgetragen, getrocknet und schließlich ein Kautschuk in Strangform darauf aufgebracht. Alternativ zum genannten Zweischicht-System kann ein Einschicht-Bindemittel wie z.B. Chemosil 360® von Henkel, auf die oben genannten Art und Weise, aufgetragen werden.

Der unvulkanisierte Kautschuk wird bevorzugt aus der Gruppe der natürlichen oder synthetischen Kautschuke, insbesondere Silikonkautschuke, Fluorkautschuke, Styrol-Butadien-Kautschuk, Acrylnitril-Butadien-Kautschuk (NBR) gewählt, Ihre Elastomere zeichnen sich durch hervorragende mechanische Eigenschaften, insbesondere Abriebfestigkeit und Temperaturbeständigkeit aus, wodurch sie für den Einsatz auf Transport- oder Prozessbändern besonders geeignet sind.

Das derart vorbereitete Förderband BAN wird in die Vulkanisationspresse VUP eingebracht, und der Kautschuk ELA auf dem Transport- oder Prozessband BAN verpresst und vulkanisiert. Ein typisches Beispiel für die Vulkanisation von NBR ist eine Vulkanisationstemperatur von 170 - 180°C bei einem Druck von bis zu 6 bar und einer Vulkanisationszeit von bis zu 20 min. Der Kautschuk ELA erhält während des Pressens und der gleichzeitigen Vulkanisation seine endgültige Form. Die Länge des Förderbandes BAN kann beispielsweise 4 m betragen, wobei das Vulkanisieren je nach Ausführung der Presse VUP in Abschnitten mit einer Länge von 30 cm bis 2 m erfolgt.

Des Weiteren ist die Verarbeitung von Endlosbändern, die beispielsweise auf Trommeln aufgerollt und deren beiden Enden miteinander verschweißt sind, möglich. Die Vulkanisation dieser Bänder erfolgt ebenfalls segmentweise im Taktverfahren.

In Fig. 2 ist ein erfindungsgemäßes Transportband BAN dargestellt. Es weist auf seiner Produktseite PRO ein Elastomerprofil ELA auf, das als Stau- bzw. Rückhalteleiste fungiert. Damit wird das auf der Produktseite PRO aufgebrachte Fördergut am seitlichen Hinausfallen beziehungsweise Überfließen über die Ränder des Transport- oder Prozessbandes BAN gehindert. Vorteilerhafterweise sind an den jeweiligen Kanten des Transportbandes BAN derartige Begrenzungsprofile vorgesehen, um einen sicheren Transport des Fördergutes zu gewährleisten.

In Fig. 3 ist das Elastomerprofil an der Unterseite ANT angebracht. Hier dient es zum Antrieb sowie zur Führung beziehungsweise dem Sicherstellen der Einhaltung ausreichender Spurtreue des Transportbandes BAN.

In Fig. 4 sind schließlich auf einem Transport- oder Prozessband BAN sowohl Stauleiste an der Produktseite PRO als auch Spurleistenprofil an der Antriebsseite ANT realisiert.

## Patentansprüche

1. Verfahren zum Vulkanisieren von Elastomerprofilen (ELA) auf Transport- oder Prozessbänder (BAN) mit den Schritten:
Vorbereiten, insbesondere Reinigen der Metalloberfläche des Transport- oder Prozessbandes (BAN),
Auftragen eines Vulkanisierprimers,
Aufbringen eines unvulkanisierten Kautschuks (ELA) in Strangform und
Vulkanisieren des Kautschuks (ELA) unter erhöhter Temperatur,
**dadurch gekennzeichnet, dass** die Vulkanisation zusätzlich unter Druck erfolgt, wobei die Aufbringung des Druckes unter Verwendung eines schlauchförmigen Druckelemente erfolgt, und dass die Formgebung des Elastomerprofils beim Vulkanisieren des Kautschuks erfolgt.

2. Verfahren nach Anspruch 1, **dadurch gekennzeichnet, dass** die Vorbereitung der Metalloberfläche mittel Sandstrahlen erfolgt.

3. Verfahren nach Anspruch 1 oder 2 **dadurch gekennzeichnet, dass** nach erfolgter Reinigung der Metalloberfläche vor dem Schritt des Auftragens eines Vulkanisierprimers ein Metallprimer aufgebracht wird.

4. Verfahren nach Anspruch 1 oder 2 **dadurch gekennzeichnet, dass** nach erfolgter Reinigung der Metalloberfläche vor dem Schritt des Aufbringens eines unvulkanisierten Kautschuks (ELA) ein Einschicht-Bindemittel aufgebracht wird.

5. Verfahren nach einem der Ansprüche 1 bis 4, **dadurch gekennzeichnet, dass** das Transport- oder Prozessband (BAN) aus Stahl oder Edelstahl gefertigt ist.

6. Verfahren nach einem der Ansprüche 1 bis 5, **dadurch gekennzeichnet, dass** der unvulkanisierte Kautschuk (ELA) aus der Gruppe der natürlichen oder synthetischen Kautschuke, insbesondere Nitrilkautschuk (NBR), Silikonkautschuke, Fluorkautschuk, Styrol-Butadien-Kautschuk, gewählt ist.

7. Vorrichtung (VUP) zum Vulkanisieren von Kautschuk (ELA) auf Transport- oder Prozessbänder (BAN) aus Metall mit einem Oberteil und einem Unterteil, bestehend aus jeweils einem Gehäuse (GEH), einer Isolierung (ISO) und einer Pressplatte (PRE), wobei ein Band (BAN) oder Bandabschnitt zwischen die Pressplatten (PRE) des Ober- und Unterteils durchführbar ist, wobei der Pressdruck über ein zwischen Isolierung (ISO) und Gehäuse (GEH) angeordnetes Druckelement (DRU) aufbaubar ist, **dadurch gekennzeichnet, dass** die Pressplatte (PRE) des Oberteils an der dem Transport- oder Prozessband (BAN) oder -abschnitt zugewandten Pressfläche zumindest eine Ausnehmung (AUS) aufweist, deren Querschnitt dem Querschnitt des Elastomerprofils (ELA) nach der Vulkanisation entspricht.

8. Vorrichtung (VUP) nach Anspruch 7, **dadurch gekennzeichnet, dass** das Druckelement (DRU) schlauchförmig ausgebildet ist.

9. Vorrichtung nach Anspruch 7 oder 8, **dadurch gekennzeichnet, dass** das Druckelement mit einem Druckmedium befüllbar ist.

10. Vorrichtung nach Anspruch 9, **dadurch gekennzeichnet, dass** das Medium Luft, Wasser oder Öl ist.

11. Vorrichtung (VUP) nach einem der Ansprüche 6 bis 10, **dadurch gekennzeichnet, dass** Ober- und / oder Unterteil direkt beheizbar sind.

12. Vorrichtung (VUP) nach einem der Ansprüche 6 bis 10, **dadurch gekennzeichnet, dass** Ober- und/oder Unterteil indirekt beheizbar sind.

## Claims

1. Process for vulcanisation of elastomer profiles (ELA) on conveyor or process belts (BAN) with the steps:
preparation, in particular cleaning of the metal surface of the conveyer or process belt (BAN),
application of a vulcanising primer,
application of an unvulcanised rubber (ELA) in strand form, and
vulcanisation of the rubber (ELA) at elevated temperatures,
**characterised in that** the vulcanisation also takes place under pressure, whereby the application of pressure is done by using a tubular pressure element, and that the shaping of the elastomer profile takes place during the vulcanisation of the rubber.

2. Process according to claim 1, **characterised in that** the preparation of the metal surface is done by means of sandblasting.

3. Process according to claim 1 or 2, **characterised in that** after the successful cleaning of the metal surface, a metal primer is applied before the step of applying a vulcanisation primer.

4. Process according to claim 1 or 2, **characterised in that** after the successful cleaning of the metal surface, a single layer binding agent is applied before the step of applying an unvulcanised rubber (ELA).

5. Process according to any one of claims 1 to 4, **characterised in that** the conveyor or process belt (BAN) is made of steel or stainless steel.

6. Process according to any one of claims 1 to 5, **characterised in that** the unvulcanised rubber (ELA) is chosen from the group of natural or synthetic rubbers, particularly nitrile rubber (NBR), silicone rubber, fluorine rubber or styrene butadiene rubber.

7. Device (VUP) for the vulcanisation of rubber (ELA) on conveyor or process belts (BAN) made of metal with an upper part and a lower part, consisting in each case of a housing (GEH), insulation (ISO) and a pressing plate (PRE), whereby a belt (BAN) or belt section is workable between the pressing plates (PRE) of the upper and lower part, whereby the pressing pressure can be built up by a pressure element (DRU) arranged between the insulation (ISO) and housing (GEH), **characterised in that** the pressing plate (PRE) of the upper part features on the pressing surface facing the conveyor or process belt (BAN) or section at least one recess (AUS), whose cross-section corresponds to the cross-section of the elastomer profile (ELA) after vulcanisation.

8. Device (VUP) according to claim 7, **characterised in that** the pressure element (DRU) has a tubular form.

9. Device according to claim 7 or 8, **characterised in that** the pressure element can be filled with a pressure medium.

10. Device according to claim 9, **characterised in that** the medium is air, water or oil.

11. Device (VUP) according to any one of claims 6-10, **characterised in that** the upper and/or lower part can be directly heated.

12. Device (VUP) according to any one of claims 6 to 10, **characterised in that** the upper and/or lower part can be indirectly heated.

## Revendications

1. Procédé pour la vulcanisation de profilés en élastomère (ELA) sur des bandes de transport et de processus (BAN), comportant les étapes consistant à :
prétraiter, en particulier nettoyer les surfaces métalliques des bandes de transport et de processus (BAN),
appliquer un primaire de vulcanisation,
déposer un caoutchouc non vulcanisé (ELA) sous forme de brin, et
vulcaniser le caoutchouc (ELA) à température élevée,
**caractérisé en ce que** la vulcanisation est d'abord réalisée sous pression, où l'on réalise l'application de pression en utilisant un élément de pression tubulaire et où l'on réalise le façonnage du profilé en élastomère lors de la vulcanisation du caoutchouc.

2. Procédé selon la revendication 1, **caractérisé en ce que** le prétraitement des surfaces métalliques est réalisé avec des jets de sable.

3. Procédé selon la revendication 1 ou 2, **caractérisé en ce qu'**après le nettoyage des surfaces métalliques et avant l'application d'un primaire de vulcanisation, on applique un primaire pour métaux.

4. Procédé selon la revendication 1 ou 2, **caractérisé en ce qu'**après le nettoyage des surfaces métalliques et avant l'étape de dépôt d'un caoutchouc non vulcanisé (ELA), on applique un liant monocouche.

5. Procédé selon l'une des revendications 1 à 4, **caractérisé en ce que** la bande de transport ou de processus (BAN) est en acier ou en acier spécial.

6. Procédé selon l'une des revendications 1 à 5, **caractérisé en ce que** le caoutchouc non vulcanisé (ELA) est choisi parmi le groupe des caoutchoucs naturels et synthétiques, en particulier du caoutchouc nitrile (NBR), du caoutchouc silicone, du caoutchouc fluoré, du caoutchouc styrène-butadiène.

7. Dispositif (VUP) pour la vulcanisation du caoutchouc (ELA) sur des bandes de transport et de processus (BAN) en métal, avec une partie supérieure et une partie inférieure, consistant chaque fois, en un logement (GEH), un isolant (ISO) et une plaque de presse (PRE), où une bande (BAN) ou segment de bande peut être passé entre les plaques de presse (PRE) des parties supérieure et inférieure, où la pression peut être élaborée par un élément de pression (DRU) agencé entre l'isolant (ISO) et le logement (GEH), **caractérisé en ce que** la plaque de presse (PRE) de la partie supérieure présente sur la surface de pression orientée vers la bande de transport ou de processus (BAN) ou un segment de celle-ci, un creux (AUS) dont la coupe transversale correspond à la coupe transversale du profilé en élastomère (ELA) après la vulcanisation.

8. Dispositif (VUP) selon la revendication 7, **caractérisé en ce que** l'élément de pression (DRU) est tubulaire.

9. Dispositif selon la revendication 7 ou 8, **caractérisé en ce que** l'élément de pression peut être rempli d'un milieu de pression.

10. Dispositif selon la revendication 9, **caractérisé en ce que** le milieu est l'air, de l'eau ou une huile.

11. Dispositif (VUP) selon l'une des revendications 6 à 10, **caractérisé en ce que** la partie supérieure et/ou la partie inférieure peuvent être chauffées de manière directe.

12. Dispositif (VUP) selon l'une des revendications 6 à 10, **caractérisé en ce que** la partie supérieure et/ou la partie inférieure peuvent être chauffées indirectement.
